# EUROPEAN PATENT SPECIFICATION

(11) **EP 2 662 927 B1**
(45) Date of publication and mention of the grant of the patent: **12.12.2018**
(21) Application number: 13167322.0
(22) Date of filing: 10.05.2013
(51) Int. Cl.: H01Q 1/24, H01Q 3/26, H04W 16/28, H01Q 21/06, H01Q 25/00, H01Q 21/26, H04B 7/06

(54) **Active antenna control**
Aktive Antennensteuerung
Commande d'antenne active

(30) Priority: 10.05.2012 ES 201230704
(43) Date of publication of application: 13.11.2013
(73) Proprietor: Vodafone IP Licensing Limited, The Connection Newbury Berkshire RG14 2FN (GB); Vodafone España, S.A.U., 28108 Alcobendas (ES)
(72) Inventor: Lopez, Javier, 28108 Alcobendas (ES); Le Pezennec, Yannick, 28108 Alcobendas (ES); McWilliams, Brendan, 28108 Alcobendas (ES); Arranz Arauzo, Miguel, 28108 Alcobendas (ES)
(74) Representative: Boult Wade Tennant LLP

(56) References cited:
- EP-A2- 1 026 778
- EP-A2- 2 611 045
- FR-A1- 2 766 994
- US-A1- 2011 199 992
- US-A1- 2011 205 930

## Description

### Technical Field of the Invention

The invention concerns an active antenna controller, an active antenna comprising such a controller and a method of controlling an active antenna for an active antenna, preferably as part of a cellular network station.

### Background to the Invention

Active antennas are increasingly being used, particularly within cellular networks. These antennas may comprise dedicated transmission and reception boards per dipole, allowing a network operator to configure the antenna beam shape. In particular, the tilt angle can be adjusted. Moreover, different tilt angles can be set for uplink and downlink paths.

The tilt of the beam is conventionally set up by the design engineer in a static way. This process is carried out in an optimization phase, during installation, periodically or on an ad-hoc basis. Once set during optimisation, the tilt angle remains constant.

One reason for this is as follows. Adjustment of the beam shape may change the coverage area of the cell sector. The optimal coverage area is normally determined during network planning. This takes into account cell capacity, neighbouring cell coverage and capacity, radio propagation effects, terrain and other factors in order to provide a minimum Quality of Service (QoS) across a wide geographical area. Moreover, current network planning is also based on assumptions for a large number of factors, including the distribution of mobile stations within a cell, typical proportions of active users, type of service being requested (voice or data), propagation channel modelling. Thus, keeping the beam shape and especially tilt angle constant has been considered desirable, to avoid any negative impact on minimum QoS.

Improving the efficient use of active antennas without disrupting QoS levels is a significant challenge in radio system design.

EP 2 611 045 A2 describes a transmission system and method for use in a mobile communication network comprising an active antenna arrangement of multiple antennas.

FR 2 766 994 A1 describes a transmit and receive adaptive phased antenna array. In one embodiment, the antenna system is driven by a beam control unit, which moves the beam direction in a prescribed order.

US 2011/0205930 A1 describes techniques for determining transmitter antenna weights at a base station.

US 2011/0199992 A1 describes a system and method for antenna radiation patent sweeping and wireless networks.

### Summary of the Invention

Against this background, there is provided an active antenna controller according to claim 1.

The active antenna controller therefore dynamically adjusts the beam shape, preferably the tilt angle of the active antenna, based on feedback from a signal transmitted by or received at the same active antenna. This dynamic (optionally, closed-loop) approach contrasts with the static control taken by existing systems, in which the beam shape (tilt angle) is set up during an initial configuration phase and then remains constant. The dynamic adjustment may take place with a predetermined frequency, is advantageously automatic and may be effected using a processor configured accordingly.

The quality measurement may capture the variation in distribution of mobile stations within a cell, proportions of active users, type of service being requested (voice or data), channel propagation and therefore improves efficiency. By optimally selecting the beam shape, the noise in the system can thereby be reduced and the signal strength (and signal-to-noise ratio or equivalently, signal-to-noise-plus-interference ratio) for signals received by the active antenna may be increased. This may increase the capacity of the system using the active antenna, especially if it is a cellular network base station and consequently, the experience provided to users may also be improved.

An active antenna typically comprises a plurality of dipoles, each dipole being coupled to a respective RF module. The control signal may therefore be provided to the plurality of RF modules to effect the desired beam shape. The control signal is preferably a signal provided to one or more RF modules in order to generate the selected beam shape. More preferably, the control signal is configured to select a phase vector, thereby setting the relevant phase offset on each RF module. This may determines the resulting beam shape, such as tilt angle.

Preferably, the quality measurement is for a signal (which may comprise one or more signals in practice) received at the active antenna. Additionally or alternatively, the dynamic adjustment relates to signals received at the active antenna.

Preferably, the quality measurement may be based on a signal communicated between the active antenna and a plurality of differently located mobile stations. More preferably, the quality measurement is based on a signal received at the active antenna from a plurality of differently located mobile stations (termed the uplink). Although the term mobile stations is used, this is used within its normal context within cellular networks, such mobile stations being equivalently referred to as User Equipment (UE). Thus, some stations may not necessarily be moving or even movable. Advantageously, the differently located mobile stations may each comprise a receiver distinct from any receivers coupled to the active antenna. The differently located mobile stations are beneficially located over a predetermined geographical area. This allows the quality measurement to indicate the effectiveness of the active antenna beam shape. The quality measurement preferably comprises one or more of: at least one signal strength of the communicated signal; at least one signal to noise ratio for the communicated signal; and an error rate of data contained in the communicated signal.

Optionally, the active antenna controller further comprises an input for receiving information relating to the quality measurement for one or more signals communicated through the active antenna. This information relating to the quality measurement may be for one or more signals received at the active antenna. In the latter case, the information may be provided to the active antenna controller by another station that has received the signal transmitted by the active antenna.

In the preferred embodiment, the quality measurement is for a signal communicated between the active antenna and a plurality of differently located mobile stations. The quality measurement may then be based on a signal-to-noise ratio for a respective portion of the communicated signal associated with each of the plurality of differently located mobile stations. A signal-to-noise ratio (SNR) may be a signal-to-noise-plus-interference ratio (SINR), where there is interference present.

In some embodiments, a processor may be adapted to determine the quality measurement based on one or more signals received at the active antenna.

Preferably, the active antenna controller also comprises a processor, configured to generate the control signal for dynamic adjustment of the beam shape of the associated active antenna based upon the quality measurement. More preferably, the active antenna controller further comprises an output for providing the control signal to the associated active antenna. There may optionally be a plurality of control signals, each of the plurality of control signals relating to a respective RF module for the plurality of RF modules comprised in the active antenna.

The active antenna controller may control the beam shape of the active antenna essentially continuously. In other words, each time a new quality measurement for a signal communicated through the active antenna is obtained, the beam shape may be adjusted.

However, the preferred embodiment operates slightly differently. Here, the active antenna controller is configured to provide the control signal during a first time period so as to adjust the beam shape of the associated active antenna to each of a plurality of configuration beam shapes, to establish a respective quality measurement for a signal communicated through the active antenna when each of the configuration beam shapes is set. In other words, the first time period is a configuration period, used identify a desirable or optimum beam shape. Then, the active antenna controller may be configured to determine a desired beam shape based on the plurality of established quality measurements. This allows the active antenna controller to use the plurality of established quality measurements (each of which is related to a respective beam shape) to find the beam shape which optimises or maximises the quality measurement. In these embodiments, the active antenna controller may be further configured to provide the control signal during a second time period so as to adjust the beam shape of the associated active antenna to only the desired beam shape. In this second time period (subsequent and distinct from the first time period), the beam shape of the active antenna may be fixed by the active antenna controller and no further quality measurements are taken in this second time period. Most preferably, the first and second time periods are repeated with a predetermined frequency, a new first time period following the completion of the second time period. It will be appreciated that the second time period is advantageously significantly longer than the first time period. For example, the second time period may be 5, 10, 15, 20, 50 or 100 times longer than the second time period.

Optionally, the plurality of configuration beam shapes are predetermined. In such cases, the desired beam shape may be determined by selecting the one of the plurality of configuration beam shapes having the optimum associated quality measurement. Alternatively, the plurality of configuration beam shapes may be determined iteratively. This may be implemented by the active antenna controller being configured repeatedly to: set a configuration beam shape; establish the associated quality measurement for the set configuration beam shape; and determine a subsequent configuration beam shape on the basis of the established associated quality measurement. The desired beam shape may then be determined on the basis of the difference between the subsequent configuration beam shape and the previous configuration beam shape or based on the number of repetitions or another factor that the skilled person would understand to be used in iterative determinations.

In embodiments, the active antenna controller may be further configured to provide the control signal based upon whether the active antenna is being used for transmission or reception. In other words, a different control signal may be provided for transmission and reception. This can be beneficial in stations (base stations or mobile stations) of cellular networks, so that the beam shape can be different between uplink and downlink. In some embodiments, the beam shape for either transmission or reception may be dynamically adjusted based upon the quality measurement, whereas the beam shape for the other may be fixed or set in a different way.

As noted above, the associated active antenna may comprise an array of antennas. In such cases, the active antenna controller is preferably further configured to generate the control signal for separate adjustment of each of the antennas in the associated active antenna. The associated active antenna may comprise in particular cases at least one antenna formed of a plurality of dipoles. The plurality of dipoles may be arranged in cross-polar form. The associated active antenna can optionally comprise a plurality of antennas, each antenna being formed of a respective plurality of dipoles. Then, the active antenna controller may be further configured to generate the control signal for separate adjustment of each of the plurality of dipoles in the associated active antenna. This may allow improved reception diversity. Each of the plurality of dipoles may have a different polarisation. Typically, each of the plurality of dipoles is assembled as a pair of dipoles, with orthogonal polarization. This may allow transmit and receive diversity to be effected. Thus, the tilt angle of each polarisation may be adjusted independently.

In the preferred embodiment, the active antenna controller is adapted for control of an associated active antenna for use in a station (especially a base station) of a cellular radio network, preferably for control of the active antenna in a reception mode. The present invention may also be provided as a component (or part) of a station for a cellular radio network comprising the active antenna controller as described herein. Preferably, the station is a base station of a cellular radio network, such as a Node B of a UTRAN cellular network or eNodeB of an E-UTRAN cellular network.

The active antenna controller may be part of the active antenna (for example, within a housing of the active antenna) or separate from it. In the former case, there may be provided an active antenna comprising the active antenna controller as described herein. In the latter case, there may be provided a component of a cellular network station comprising the active antenna controller as described herein. For example, the component may be a base band unit of a base station.

In a further aspect, the present invention may provide a method for controlling an active antenna comprising dynamically adjusting the beam shape of the active antenna based upon a quality measurement for a signal communicated through the active antenna. In another aspect, the present invention may be found in a computer program, configured to carrying out a method described herein when operated on a processor.

It will be understood that this method can optionally comprise steps or features used to carry out any of the actions described in connection with the active antenna controller detailed above. Also, any combination of the individual apparatus features or method features described may be implemented, even though not explicitly disclosed.

### Brief Description of the Drawings

The invention may be put into practice in various ways, a number of which will now be described by way of example only and with reference to the accompanying drawings in which:
Figure 1 shows a schematic diagram of an existing active antenna system implemented for reception;
Figure 2 shows a schematic diagram of an active antenna system according to a first embodiment of the present invention, implemented for reception;
Figure 3 shows a schematic diagram of an active antenna system according to a second embodiment of the present invention, implemented for reception;
Figure 4A depicts a graph of phase vector against time in line with a mode of operation according to the present invention; and
Figure 4B illustrates an expanded portion of the graph of Figure 4A.

### Detailed description of Preferred Embodiments

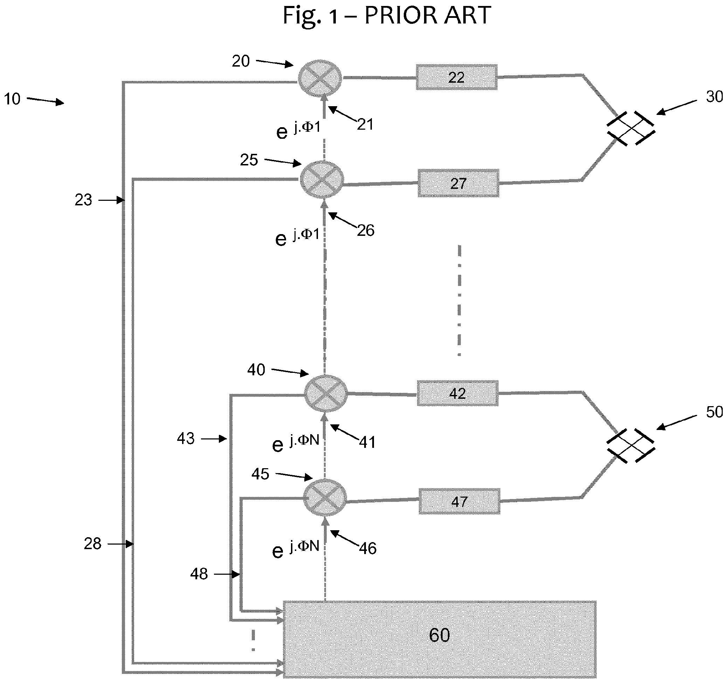

Referring first to Figure 1, there is shown a schematic diagram of an existing active antenna system 10, implemented for reception. Within the active antenna system 10, there is shown a first antenna 30 and a second antenna 50, although there may be more than these two antennas in a practical implementation of this system. An active antenna controller 60 is also provided.

Each of the first antenna 30 and second antenna 50 comprise a cross-polar array of dipoles. This provides two-way receiver diversity, as each dipole can be coupled to a separate receiver.

Coupled to a first dipole of the first antenna 30 is a first receiver 22. The output of the first receiver 22 is provided to a first multiplier 20. The other input to the first multiplier 20 is a first phase offset signal 21. The form of the first phase offset signal 21 is e^{j.Φ1}, causing the output of the first receiver 22 to be adjusted by a phase angle of Φ1. The output of the first multiplier 20 is a first output signal 23. The first receiver 22 and first multiplier 20 together form a first RF module.

The second dipole of the first antenna 30 is coupled to a second receiver 27. The second receiver 27 can be used for diversity reception. The output of the second receiver 27 is provided to a second multiplier 25. The other input to the second multiplier 25 is a second phase offset signal 26, of the form e^{j.Φ1}. The output of the second multiplier 25 is a second output signal 28. The second receiver 27 and second multiplier 25 together form a second RF module.

An equivalent configuration exists for the second antenna 50. A first dipole of a second antenna 50 provides a signal to a third receiver 42 and the output of the receiver is provided to a third multiplier 40. The other input to the third multiplier 40 is a third phase offset signal of the form e^{j.Φn}. The output of the third multiplier 40 is a third output signal 43. The second dipole of the second antenna 50 is coupled to a fourth receiver 47, the output of which is provided to a fourth multiplier 45. The other input to the fourth multiplier 45 is a fourth phase offset signal 46, of the form e^{j.Φn} The output of the fourth multiplier 45 is a fourth output signal 48. The third receiver 42 and third multiplier 40 together form a third RF module and the fourth receiver 47 and fourth multiplier 45 together form a fourth RF module.

It will be noted that the first phase offset signal 21 and the second phase offset signal 26 are the same and the third phase offset signal 41 and the fourth phase offset signal 46 are also the same. Thus, the antenna patterns of both reception paths of the respective dipoles are the same for each antenna.

As explained above, only two antennas are shown in this schematic diagram, but it will be appreciated that more than two antennas may be provided. This will be understood by the dotted lines separating the components coupled to the first antenna 30 from the components coupled to the second antenna 50.

The active antenna controller 60 is configured such that the tilt of the beam, in uplink and downlink, is set by the design engineer in a static way. This occurs at a single time, for example during installation or during periodical optimisation or on an ad hoc basis. Then, the tilt angle remains constant independently of the network load, the user distribution and any other factor. Moreover, the tilt angle configured in the downlink path is the same as that in the uplink path.

It has been recognised that this static approach is inefficient. Factors such as user distribution, type of service and network load vary with the time. Ignoring these variations reduces efficiency. Rather, it is possible to take advantage of the active antenna architecture to adjust the antenna tilt dynamically in order to maximise the quality of the signal communicated through the antenna. This is especially the case where the active antenna is used in the uplink of a base station for a cellular network and the quality of the received signal can be maximised.

In particular, the target tilt angle can be one that maximises the signal-to-noise ratio in the reception chain of the base station, but without degradation of performance. This may be achieved by ensuring that a minimum signal-to-noise ratio can be set per user, such that all active users within the cell of the base station are guaranteed a minimum service level. Approaches to implement this dynamic adjustment of beam shape are now described.

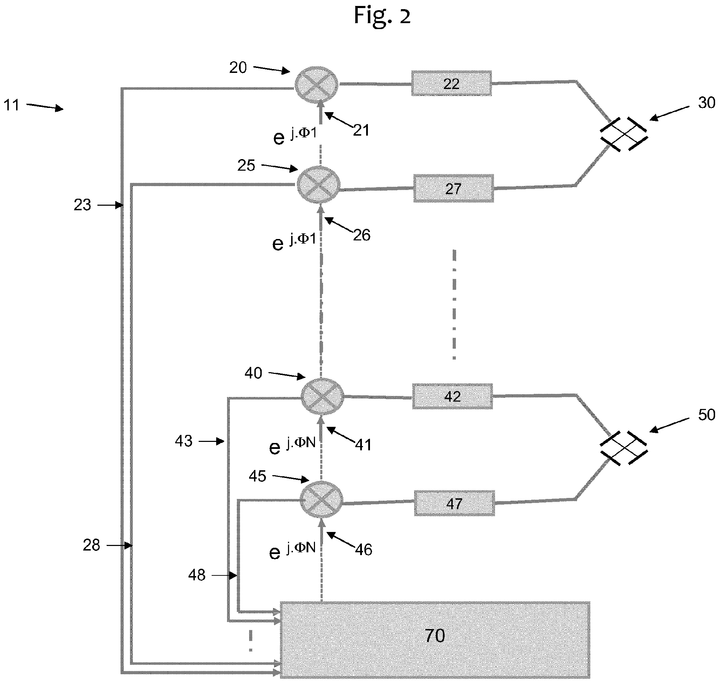

Referring next to Figure 2, there is shown a schematic diagram of an active antenna system according to a first embodiment of the present invention, implemented for reception. Most of the components of this active antenna system 11 are identical to the active antenna system 10 shown in Figure 1. In such cases, the same reference numerals have been used. The main difference lies in the replacement of active antenna controller 60 by a new active antenna controller 70. In this approach, the first output signal 23, second output signal 28, third output signal 43 and fourth output signal 48 are provided to the active antenna controller 70, which dynamically adjusts the phase offset signals (specifically, the first phase offset signal 21, the second phase offset signal 26, the third phase offset signal 41 and the fourth phase offset signal 46) applied to the multipliers. In this approach, the phase angle (Φ1) applied to the dipoles of the first antenna 30 and the phase angle (Φ2) applied to the dipoles of the second antenna 50 can be adjusted in accordance with the output signals received at the active antenna controller 70. A beamforming algorithm is used for this purpose.

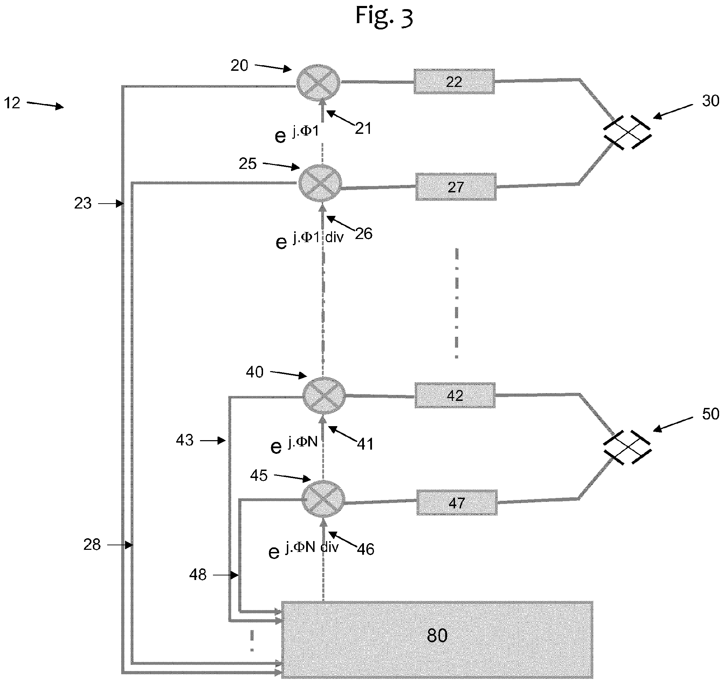

Referring next to Figure 3, there is shown a schematic diagram illustrating an active antenna system in accordance with the second embodiment of the present invention. Again, this system is similar to the systems shown in Figures 1 and 2 and identical components are indicated by the same reference numerals. The active antenna controller 80 is different from the active antenna controllers shown in the other diagrams, though. In this embodiment, the first phase offset signal 21 is different from the second phase offset signal 26. Similarly, the third phase offset signal 41 is different from the fourth phase offset signal 46. This allows a variable tilt angle to be applied independently to each diversity branch.

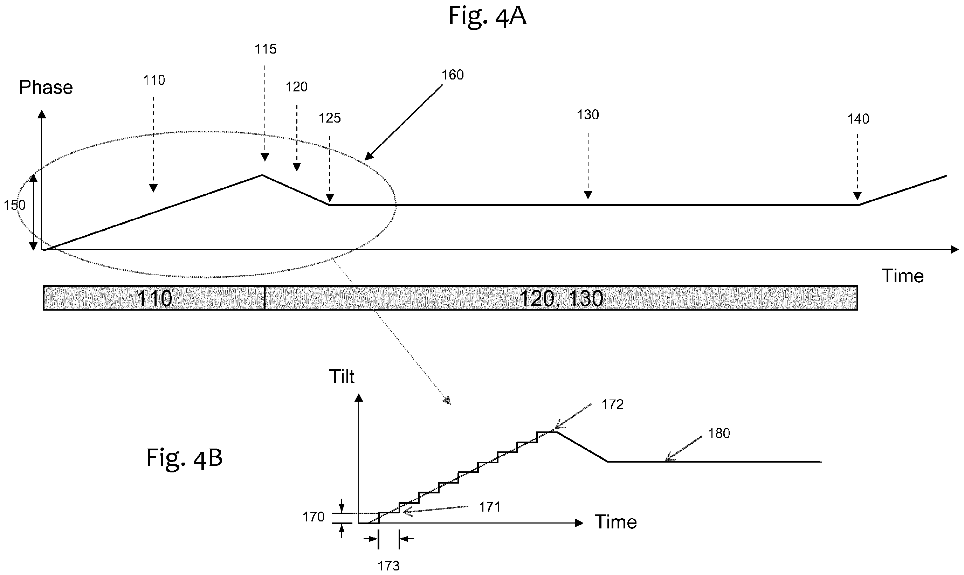

Referring next to Figure 4A, there is depicted a graph of phase vector against time in line with a mode of operation according to the present invention. Due to the multiplicity of tilt options, the algorithm for selection and application of the phase offset is designed to maximise performance and minimise overhead. Thus, tilt sweeping is used to discover the most appropriate tilt to apply.

In a tilt scanning period 110, the phase offset or equivalently tilt angle is adjusted over a predetermined tilt range 150. The algorithm measures a received signal-to-noise ratio (or multiple signal-to-noise ratios in the uplink with multiple transmissions from different mobile stations) for each tilt angle value. Preferably, the signal-to-noise-plus-interference ratio (SINR) is used rather than SNR, although either may be employed in practice. At time 115, the phase sweeping is completed and this is the end of the tilt scanning period 110. Then, the tilt angle value providing the optimal performance is selected. The algorithm selects the tilt angle providing the maximum SINR, whilst ensuring that a minimum quality of service level for each user within the cell is guaranteed, by checking that the respective SINR is at least at a minimum level or threshold.

This is desirable in the uplink, because the SINR per user can be monitored for each tilt angle. The tilt selected is that which maximises the average (mean, median or mode) SINR over all users and simultaneously ensure that all users are above the minimum quality threshold. The minimum threshold can depend on the type of service (for example, voice or data), so each user may have a different minimum quality threshold.

A tilt application period then begins. At an initial part 120 of the tilt application period, the tilt angle determined during the tilt scanning period is converged towards and this conversion is completed at time 125. During time period 130, the tilt angle remains constant. It will be seen that the tilt application period 130 is much longer in duration than the tilt scanning period 110.

At time 140, a new tilt scanning period begins. This may be initiated at a predetermined time following time 115 or time 125. Alternatively, it can be initiated by an event occurring, such as a new user becoming active in the cell.

Referring next to Figure 4B, there is illustrated an expanded portion of the graph of Figure 4A. The expanded portion 160 shows the tilt scan step 170 and a time unit 173 for tilt offset. Starting from a minimum allowed tilt 171, the tilt angle is increased stepwise over time by increments of tilt scan step 170 every time unit 173. This continues until a maximum allowed tilt 172 is reached.

As the numbers of different phase combinations are limited to the electrical tilt range supported by the active antenna, an exhaustive method can be used. This may be implemented whilst still maintaining a reasonable tilt scanning period 110. Typically, the electrical tilt range of base station antenna, as maximum, has 15 different values. In the example where 15 possible phase vectors are selected, this will lead to a phase sweeping period of 150ms, assuming a time unit 173 of 10ms per tilt value. In addition, the tilt range suitable for scan be set by an operator with a minimum and maximum tilt value.

This approach is applicable to the implementations described with respect to both Figures 2 and 3. However, it will be recognised that for the embodiment shown in Figure 3, where the tilt angle may be selected independently for each dipole, the number of phase vectors selected in the tilt scanning period 110 will need to be greater than in the embodiment shown in Figure 2. This creates a further challenge, which can be resolved in a number of different ways. The following are some possible approaches.
1. A tilt sweeping can firstly be carried out for all of the reception paths simultaneously, followed by a single tilt sweeping in the additional reception branches.
2. An exhaustive tilt sweeping can be performed for all possible tilt combinations between the diversity branches in an initial tilt scanning period. However, in subsequent tilt scanning periods, the tilt sweeping may be limited to a range of 2 or 3 tilt values around the last optimum tilt combination.
3. Either option 1 or 2 above may firstly be used. This can then be followed by tilt sweeping per group of cross polar dipoles.

Although embodiments of the invention have been described above, the skilled person will recognise that various modifications or adjustments can be made. For example, although the tilt angle has been specified for adjustment in the embodiments described above, it will be understood that the beam shape can be adjusted differently and in different ways. Also, the specific configuration of active antenna, having multiple antennas each with two cross polar dipoles may be varied. The number of antennas and the number of dipoles per antenna may be different. The number of dipoles per antenna may vary between different antennas.

The tilt angles applied in the downlink may be different from those used in the uplink or the same. It is believed that having a fixed tilt angle in the downlink (that is, for use in transmission from a base station) is preferable.

Although signal-to-noise ratio is used as a measurement of quality, it will be understood that a signal-to-noise-plus-interference ratio can equivalently be used. It will also be appreciated that other measurements may be used, such as signal strengths or error rates. Also, optimising the quality measurement can be performed in a variety of different ways. For example, an iterative approach may be taken, in which the tilt angle (or other shape) is adjusted according to a quality measurement determined in respect of one or more previous tilt angles. This can be done during an initialisation phase, as described above, or on a continuous basis. This latter approach is more difficult and less preferred.

## Claims

1. An active antenna controller (70), arranged to provide a control signal (21) for dynamic adjustment of the beam shape of an associated active antenna (30) for use in a station of a cellular radio network based upon a plurality of quality measurements for a signal received at the active antenna, wherein the control signal is for dynamic selection of the tilt angle of the associated active antenna, **characterized in that** the active antenna controller is adapted to establish the plurality of quality measurements of a signal received from a plurality of differently located mobile stations by adjusting the beam shape of the associated active antenna to each of a plurality of configuration beam shapes, each of the plurality of quality measurements being based on a quality for a respective portion of the received signal associated with each of the plurality of differently located mobile stations.

2. The active antenna controller of any preceding claim, comprising:
an input for receiving information relating to each of the quality measurements for a signal received by the active antenna;
a processor, configured to generate the control signal for dynamic adjustment of the beam shape of the associated active antenna based upon the plurality of quality measurements; and
an output for providing the control signal to the associated active antenna.

3. The active antenna controller of claim 2, wherein the information relating to each of the plurality of quality measurements comprises a signal received at the active antenna and wherein the processor is further adapted to determine each of the quality measurements based on the signal received at the active antenna.

4. The active antenna controller of any preceding claim, wherein each of the quality measurement comprises one or more of: at least one signal strength of the received signal; at least one signal-to noise-ratio for the received signal; and an error rate of data contained in the received signal.

5. The active antenna controller of any preceding claim, wherein the active antenna controller is configured to select among the plurality of configuration beam shapes the tilt angle that maximises an average quality measurement over all users and simultaneously ensures that all users are above a minimum quality threshold.

6. The active antenna controller of any preceding claim, wherein the active antenna controller is configured to provide the control signal during a first time period (110) so as to adjust the beam shape of the associated active antenna to each of the plurality of configuration beam shapes, to determine a desired beam shape based on the plurality of established quality measurements and to provide the control signal during a second time period (130) so as to adjust the beam shape of the associated active antenna to only the desired beam shape.

7. The active antenna controller of claim 6, wherein the second time period is significantly longer than the first time period.

8. The active antenna controller of claim 6 or claim 7, wherein the plurality of configuration beam shapes are predetermined and wherein the desired beam shape is determined by selecting the one of the plurality of configuration beam shapes having the optimum associated quality measurement.

9. The active antenna controller of claim 6 or claim 7, wherein the plurality of configuration beam shapes are determined iteratively by repeatedly setting a configuration beam shape, establishing the associated quality measurement for the set configuration beam shape and determining a subsequent configuration beam shape on the basis of the established associated quality measurement.

10. The active antenna controller of any preceding claim, wherein the associated active antenna comprises an antenna formed of a plurality of dipoles, the active antenna controller being further configured to generate the control signal for separate adjustment of each of the plurality of dipoles in the associated active antenna.

11. A component of a station for a cellular radio network comprising the active antenna controller of any preceding claim.

12. A method for controlling an active antenna (30) for use in a station of a cellular radio network using an active antenna controller (70) arranged to provide a control signal, the method comprising dynamically adjusting the beam shape of the active antenna based upon a plurality of quality measurements for a signal received at the active antenna, wherein the control signal is for dynamic selection of the tilt angle of the associated active antenna, **characterized in that** the plurality of quality measurements are established for a signal received from a plurality of differently located mobile stations by adjusting the beam shape of the associated active antenna to each of a plurality of configuration beam shapes, the quality measurement being based on a quality for a respective portion of the received signal associated with each of the plurality of differently located mobile stations.

## Patentansprüche

1. Eine aktive Antennensteuereinheit (70), die eingerichtet ist, um ein Steuersignal (21) für die dynamische Anpassung der Strahlform einer verbundenen aktiven Antenne (30) zur Verwendung in einer Station eines zellularen Funknetzes basierend auf einer Vielzahl von Qualitätsmessungen für ein an der aktiven Antenne empfangenes Signal bereitzustellen, wobei das Steuersignal der dynamischen Auswahl des Neigungswinkels der verbundenen aktiven Antenne dient, **dadurch gekennzeichnet, dass** die aktive Antennensteuereinheit eingerichtet ist, um die Vielzahl von Qualitätsmessungen eines von einer Vielzahl unterschiedlich positionierter Mobilstationen empfangenen Signals zu erstellen, indem die Strahlform der verbundenen aktiven Antenne an jede aus einer Vielzahl von Konfigurationsstrahlformen angepasst wird, wobei jede aus der Vielzahl von Qualitätsmessungen auf einer Qualität für einen jeweiligen Teil des empfangenen Signals in Verbindung mit jeder aus der Vielzahl unterschiedlich positionierter Mobilstationen basiert.

2. Die aktive Antennensteuereinheit nach einem vorhergehenden Anspruch, umfassend:
einen Eingang für den Empfang von Informationen im Zusammenhang mit jeder der Qualitätsmessungen für ein durch die aktive Antenne empfangenes Signal;
eine Verarbeitungseinheit, die eingerichtet ist, um das Steuersignal für die dynamische Anpassung der Strahlform der verbundenen aktiven Antenne basierend auf der Vielzahl von Qualitätsmessungen zu erzeugen; und
einen Ausgang für die Bereitstellung des Steuersignals an die verbundene aktive Antenne.

3. Die aktive Antennensteuereinheit nach Anspruch 2, wobei die Informationen im Zusammenhang mit jeder aus der Vielzahl von Qualitätsmessungen ein an der aktiven Antenne empfangenes Signal umfasst und wobei die Verarbeitungseinheit weiter dafür ausgelegt ist, jede der Qualitätsmessungen basierend auf dem an der aktiven Antenne empfangenen Signal zu bestimmen.

4. Die aktive Antennensteuereinheit nach einem vorhergehenden Anspruch, wobei jede der Qualitätsmessungen eines oder mehrere der folgenden umfasst: mindestens eine Signalstärke des empfangenen Signals; mindestens ein Signal-RauschVerhältnis für das empfangene Signal; und eine Fehlerrate der in dem empfangenen Signal enthaltenen Daten.

5. Die aktive Antennensteuereinheit nach einem vorhergehenden Anspruch, wobei die aktive Antennensteuereinheit eingerichtet ist, um unter der Vielzahl von Konfigurationsstrahlformen den Neigungswinkel auszuwählen, der eine durchschnittliche Qualitätsmessung über alle Benutzer maximiert und gleichzeitig sicherstellt, dass alle Benutzer über einem Mindestqualitätsschwellenwert liegen.

6. Die aktive Antennensteuereinheit nach einem vorhergehenden Anspruch, wobei die aktive Antennensteuereinheit eingerichtet ist, um das Steuersignal zwecks Anpassung der Strahlform der verbundenen aktiven Antenne an jede aus der Vielzahl der Konfigurationsstrahlformen während eines ersten Zeitraums (110) bereitzustellen, um basierend auf der Vielzahl erstellter Qualitätsmessungen eine gewünschte Strahlform zu bestimmen und um das Steuersignal zwecks Anpassung der Strahlform der verbundenen aktiven Antenne an ausschließlich die gewünschte Strahlform während eines zweiten Zeitraums (130) bereitzustellen.

7. Die aktive Antennensteuereinheit nach Anspruch 6, wobei der zweite Zeitraum bedeutend länger als der erste Zeitraum ist.

8. Die aktive Antennensteuereinheit nach Anspruch 6 oder 7, wobei die Vielzahl von Konfigurationsstrahlformen zuvor bestimmt wird und wobei die gewünschte Strahlform bestimmt wird, indem aus der Vielzahl von Konfigurationsstrahlformen diejenige mit der bestmöglichen verbundenen Qualitätsmessung ausgewählt wird.

9. Die aktive Antennensteuereinheit nach Anspruch 6 oder 7, wobei die Vielzahl von Konfigurationsstrahlformen iterativ bestimmt wird, indem wiederholt eine Konfigurationsstrahlform festgelegt wird, die verbundene Qualitätsmessung für die festgelegte Konfigurationsstrahlform erstellt wird und eine darauf folgende Konfigurationsstrahlform auf der Basis der erstellten verbundenen Qualitätsmessung bestimmt wird.

10. Die aktive Antennensteuereinheit nach einem vorhergehenden Anspruch, wobei die verbundene aktive Antenne eine aus einer Vielzahl von Dipolen gebildete Antenne umfasst, wobei die aktive Antennensteuereinheit weiter eingerichtet ist, um das Steuersignal für die separate Anpassung jedes aus der Vielzahl von Dipolen in der verbundenen aktiven Antenne zu erzeugen.

11. Eine Komponente einer Station für ein zellulares Funknetz, umfassend die aktive Antennensteuereinheit nach einem vorhergehenden Anspruch.

12. Ein Verfahren zur Steuerung einer aktiven Antenne (30) zur Verwendung in einer Station eines zellularen Funknetzes mittels einer aktiven Antennensteuereinheit (70), die eingerichtet ist, um ein Steuersignal bereitzustellen, wobei das Verfahren die dynamische Anpassung der Strahlform der aktiven Antenne basierend auf einer Vielzahl von Qualitätsmessungen für ein an der aktiven Antenne empfangenes Signal umfasst, wobei das Steuersignal der dynamischen Auswahl des Neigungswinkels der verbundenen aktiven Antenne dient, **dadurch gekennzeichnet, dass** die Vielzahl von Qualitätsmessungen für ein von einer Vielzahl unterschiedlich positionierter Mobilstationen empfangenes Signal erstellt wird, indem die Strahlform der verbundenen aktiven Antenne an jede aus einer Vielzahl von Konfigurationsstrahlformen angepasst wird, wobei die Qualitätsmessung auf einer Qualität für einen jeweiligen Teil des empfangenen Signals in Verbindung mit jeder aus der Vielzahl unterschiedlich positionierter Mobilstationen basiert.

## Revendications

1. Un dispositif de commande d'antenne active (70) agencé de façon à fournir un signal de commande (21) destiné à un ajustement dynamique de la forme de faisceau d'une antenne active associée (30) destiné à une utilisation dans une station d'un réseau radio cellulaire en fonction d'une pluralité de mesures de qualité pour un signal reçu au niveau de l'antenne active, où le signal de commande est destiné à une sélection dynamique de l'angle d'inclinaison de l'antenne active associée, **caractérisé en ce que** le dispositif de commande d'antenne active est adapté de façon à établir la pluralité de mesures de qualité d'un signal reçu à partir d'une pluralité de stations mobiles différemment implantées par l'ajustement de la forme de faisceau de l'antenne active associée à chaque forme de faisceau d'une pluralité de formes de faisceau de configuration, chaque mesure de la pluralité de mesures de qualité étant basée sur une qualité pour une partie respective du signal reçu associé à chaque station mobile de la pluralité de stations mobiles différemment implantées.

2. Le dispositif de commande d'antenne active selon l'une quelconque des Revendications précédentes, comprenant :
une entrée destinée à la réception d'informations relatives à chacune des mesures de qualité pour un signal reçu par l'antenne active,
un processeur, configuré de façon à générer le signal de commande destiné à un ajustement dynamique de la forme de faisceau de l'antenne active associée en fonction de la pluralité de mesures de qualité, et
une sortie destinée à la fourniture du signal de commande à l'antenne active associée.

3. Le dispositif de commande d'antenne active selon la Revendication 2, où les informations relatives à chaque mesure de la pluralité de mesures de qualité comprennent un signal reçu au niveau de l'antenne active et où le processeur est adapté en outre de façon à déterminer chacune des mesures de qualité en fonction du signal reçu au niveau de l'antenne active.

4. Le dispositif de commande d'antenne active selon l'une quelconque des Revendications précédentes, où chacune des mesures de qualité comprend un ou plusieurs éléments parmi : au moins une intensité de signal du signal reçu, au moins un rapport signal sur bruit pour le signal reçu et un taux d'erreur des données contenues dans le signal reçu.

5. Le dispositif de commande d'antenne active selon l'une quelconque des Revendications précédentes, où le dispositif de commande d'antenne active est configuré de façon à sélectionner parmi la pluralité de formes de faisceau de configuration l'angle d'inclinaison qui maximise une mesure de qualité moyenne sur la totalité des utilisateurs et garantit simultanément que la totalité des utilisateurs sont au-dessus d'un seuil de qualité minimal.

6. Le dispositif de commande d'antenne active selon l'une quelconque des Revendications précédentes, où le dispositif de commande d'antenne active est configuré de façon à fournir le signal de commande au cours d'une première période temporelle (110) de façon à ajuster la forme de faisceau de l'antenne active associée à chaque forme de faisceau de la pluralité de formes de faisceau de configuration, à déterminer une forme de faisceau souhaitée en fonction de la pluralité de mesures de qualité établies et à fournir le signal de commande au cours d'une deuxième période temporelle (130) de façon à ajuster la forme de faisceau de l'antenne active associée à uniquement la forme de faisceau souhaitée.

7. Le dispositif de commande d'antenne active selon la Revendication 6, où la deuxième période temporelle est significativement plus longue que la première période temporelle.

8. Le dispositif de commande d'antenne active selon la Revendication 6 ou 7, où la pluralité de formes de faisceau de configuration sont prédéterminées et où la forme de faisceau souhaitée est déterminée par la sélection de la forme de faisceau de la pluralité de formes de faisceau de configuration possédant la mesure de qualité associée optimale.

9. Le dispositif de commande d'antenne active selon la Revendication 6 ou 7, où la pluralité de formes de faisceau de configuration sont déterminées par la répétition itérative des opérations de définition répétée d'une forme de faisceau de configuration, d'établissement de la mesure de qualité associée pour la forme de faisceau de configuration définie et de détermination d'une forme de faisceau de configuration subséquente en fonction de la mesure de qualité associée établie.

10. Le dispositif de commande d'antenne active selon l'une quelconque des Revendications précédentes, où l'antenne active associée comprend une antenne formée d'une pluralité de dipôles, le dispositif de commande d'antenne active étant configuré en outre de façon à générer le signal de commande destiné à un ajustement distinct de chaque dipôle de la pluralité de dipôles dans l'antenne active associée.

11. Un composant d'une station destiné à un réseau radio cellulaire comprenant le dispositif de commande d'antenne active selon l'une quelconque des Revendications précédentes.

12. Un procédé de commande d'une antenne active (30) destiné à une utilisation dans une station d'un réseau radio cellulaire au moyen d'un dispositif de commande d'antenne active (70) agencé de façon à fournir un signal de commande, le procédé comprenant l'ajustement dynamique de la forme de faisceau de l'antenne active en fonction d'une pluralité de mesures de qualité pour un signal reçu au niveau de l'antenne active, où le signal de commande est destiné à une sélection dynamique de l'angle d'inclinaison de l'antenne active associée, **caractérisé en ce que** la pluralité de mesures de qualité sont établies pour un signal reçu à partir d'une pluralité de stations mobiles différemment implantées par l'ajustement de la forme de faisceau de l'antenne active associée à chaque forme de faisceau d'une pluralité de formes de faisceau de configuration, la mesure de qualité étant basée sur une qualité destinée à une partie respective du signal reçu associé à chaque station mobile de la pluralité de stations mobiles différemment implantées.
